# FASCICULE DE BREVET EUROPEEN

(11) **EP 1 579 382 B1**
(45) Date de publication et mention de la délivrance du brevet: **22.02.2012**
(21) Numéro de dépôt: 03815388.8
(22) Date de dépôt: 10.12.2003
(51) Int. Cl.: G06K 19/073

(54) **ENTITE ELECTRONIQUE SECURISEE PERMETTANT UNE CERTIFICATION DU TEMPS**
SICHERE ELEKTRONISCHE ENTITÄT ZUR ZEITZERTIFIZIERUNG
SECURE ELECTRONIC ENTITY FOR TIME CERTIFICATION

(30) Priorité: 20.12.2002 FR 0216378
(43) Date de publication de la demande: 28.09.2005
(73) Titulaire: Oberthur Technologies, 92300 Levallois Perret (FR)
(72) Inventeur: DISCHAMP, Paul, F-75015 Paris (FR); GIRAUD, Christophe, F-75005 Paris (FR)
(74) Mandataire: Rosenberg, Muriel Sylvie
(86) Numéro de dépôt international: PCT/FR2003/003657
(87) Numéro de publication internationale: WO 2004/066195

(56) Documents cités:
- EP-A- 0 257 648
- EP-A- 1 160 736
- WO-A-01/54057
- FR-A- 2 764 977

## Description

L'invention se rapporte à une entité électronique sécurisée permettant une certification du temps. En particulier, à cette fin, la mesure du temps est effectuée dans l'entité électronique sécurisée.

On entend ici une gestion du temps "dans" l'entité électronique au sens où cette gestion est indépendante de tout système extérieur de mesure du temps, qu'il s'agisse par exemple d'un générateur de signal d'horloge ou de tout autre moyen de mesure du temps situé à l'extérieur par rapport à l'entité électronique.

Ces spécificités permettent de rendre relativement inviolable l'entité électronique objet de la présente invention.

L'invention peut s'appliquer à toute entité électronique sécurisée, comme, par exemple, une carte à microcircuit sécurisée.

L'entité électronique sécurisée peut être par exemple une carte à microcircuit sécurisée telle qu'une carte bancaire, une carte de contrôle d'accès, une carte d'identité, une carte SIM (module d'identification de l'abonné, en anglais *"Subscriber Identification Module"*) ou une carte mémoire sécurisée (telle qu'une carte SD (Secured Digital) de Panasonic), ou peut être une carte PCMCIA (architecture internationale de cartes-mémoire d'ordinateurs individuels, en anglais *"Personal Computer Memory Card International Architecture"*) sécurisée (par exemple, une carte IBM 4758).

La demande de brevet FR 2 764 977 décrit une étiquette électronique qui enregistre une information relative à un produit, par exemple la température de stockage du produit, dans sa mémoire en indiquant la date et l'heure de la mesure de manière à mémoriser un historique des températures, qui peut alors être vérifié par un poste de contrôle. Un code d'authentification de la date ou de l'heure mémorisée n'est toutefois pas prévu.

Un grand nombre d'applications ont besoin de s'assurer qu'un utilisateur effectue une action dans une période de temps donnée ou avant une date limite.

Par exemple, pour le paiement des impôts à distance, par voie électronique, le contribuable doit se connecter au serveur du Ministère des Finances avant la date limite de paiement de l'impôt et effectuer le paiement en ligne avant cette date. Le serveur s'assure lui-même que le paiement a été effectué dans les délais.

Une telle façon de procéder peut devenir problématique lorsque beaucoup d'utilisateurs ont tendance à réaliser les actions tous au même moment, typiquement juste avant la date limite ou dans la fin de la période autorisée. Le serveur ou les canaux de communication peuvent alors être saturés, à moins de prévoir, moyennant des coûts élevés, des infrastructures de communication surdimensionnées entre les utilisateurs et le serveur, afin d'absorber les pics de trafic ainsi engendrés.

On pourrait aussi envisager d'utiliser l'heure fournie par l'ordinateur utilisé par le contribuable pour se connecter au serveur du Ministère des Finances. Cependant, l'heure donnée par cet ordinateur pourrait être facilement falsifiée.

La présente invention a pour but de remédier à ces inconvénients, en remplaçant, dans l'exemple précédent, l'heure fournie par l'ordinateur par celle fournie et/ou certifiée par une entité électronique sécurisée. Pour ce faire, la présente invention intègre dans l'entité électronique la mesure du temps.

Dans ce but, l'invention propose une entité électronique sécurisée, remarquable en ce qu'elle contient une unité de mesure du temps et en ce qu'elle comporte une unité de certification d'une donnée relative à une date ou à une durée, l'unité de certification recevant de l'unité de mesure du temps des informations sur la date ou la durée et produisant des données de certification de cette donnée relative à une date ou une durée destinées à une entité extérieure et comprenant un code d'authentification de la date ou de la durée.

L'entité extérieure est typiquement celle où s'exécute une application utilisant l'entité électronique sécurisée pour des besoins de certification de date ou de durée. L'application peut être sous la forme d'un programme informatique exécutable ou sous forme de circuit électronique.

Ainsi, la date est calculée de façon sécurisée, car à l'intérieur de l'entité électronique sécurisée, les tentatives de fraude consistant à falsifier la date sont évitées.

Avantageusement, l'unité de certification est adaptée à fournir une date ou une durée certifiée, ou à certifier l'authenticité d'une date ou d'une durée reçue de l'extérieur, ou encore à certifier qu'une action a été réalisée dans une période de temps donnée ou avant une date limite.

Selon une caractéristique particulière, l'entité électronique sécurisée comporte en outre une unité de synchronisation.

Cela permet de définir une référence de date commune entre l'entité électronique sécurisée et l'application utilisant la date ou la durée à certifier, ou l'action dont la date est à vérifier.

Selon l'invention, l'unité de certification met en oeuvre des moyens d'authentification, tels que des moyens de chiffrement ou un code d'authentification.

Cela permet de garantir la provenance et l'intégrité des données de certification reçues par l'application en provenance de l'entité électronique sécurisée.

Avantageusement, l'unité de mesure du temps est adaptée à fournir une mesure du temps même lorsque l'entité électronique n'est pas alimentée par une source d'énergie extérieure.

Avantageusement, l'unité de mesure du temps est adaptée à fournir une mesure du temps même lorsque l'entité électronique n'est pas alimentée électriquement.

Avantageusement, l'unité de mesure du temps est adaptée à fournir une mesure du temps indépendamment de tout signal d'horloge extérieur.

En ce sens, l'unité de mesure du temps est autonome, à la fois du point de vue de la mesure du temps et du point de vue de l'alimentation électrique.

En variante, on peut bien entendu prévoir une pile et/ou une horloge dans l'entité électronique.

L'unité de mesure du temps peut comporter un moyen de comparaison de deux dates, une date étant, de façon générale, une expression du temps courant et ces deux dates s'entendant ici comme deux instants définis par rapport à une même référence temporelle.

Dans un mode de réalisation préféré de la présente invention, l'entité électronique sécurisée comporte au moins un sous-ensemble comprenant :
un composant capacitif présentant une fuite au travers de son espace diélectrique, des moyens permettant de coupler ce composant capacitif à une source d'énergie électrique pour être chargé par la source d'énergie électrique et
un moyen de mesure de la charge résiduelle du composant capacitif, cette charge résiduelle étant au moins en partie représentative du temps qui s'est écoulé après que le composant capacitif a été découplé de la source d'énergie électrique.

Dans ce cas, le composant capacitif du sous-ensemble précité ne peut être chargé que lorsque l'entité électronique sécurisée est couplée à la source d'énergie électrique. Cette dernière peut être extérieure à l'entité électronique sécurisée, mais ce n'est pas impératif : en variante, on peut prévoir d'alimenter l'entité électronique par une pile disposée dans ou sur celle-ci.

L'entité électronique pourra être pourvue d'un moyen de commutation pour découpler le composant capacitif de la source d'énergie électrique, cet événement initialisant la mesure du temps.

Plus généralement, la mesure du temps, c'est-à-dire la variation de charge du composant capacitif, commence dès que, après avoir été chargé, celui-ci se trouve électriquement isolé de tout autre circuit et ne peut plus se décharger qu'à travers son propre espace diélectrique.

Cependant, même si, physiquement, la charge résiduelle mesurée est liée à l'intervalle de temps écoulé entre l'isolement de l'élément capacitif et une mesure donnée de sa charge résiduelle, un intervalle de temps mesuré peut être déterminé entre deux mesures, la première mesure déterminant en quelque sorte une charge résiduelle de référence. Le moyen de mesure de la charge résiduelle du composant capacitif est mis en oeuvre lorsqu'on désire connaître un temps écoulé.

Le moyen de mesure de la charge résiduelle peut être compris dans l'unité de mesure du temps mentionnée plus haut.

Dans le mode préféré de réalisation, le moyen de mesure de la charge -résiduelle comprend un transistor à effet de champ dont la grille est connectée à une borne du composant capacitif, c'est-à-dire à une "armature" d'une capacité.

Une telle capacité peut être réalisée en technologie MOS et son espace diélectrique peut alors être constitué par un oxyde de silicium. Dans ce cas, il est avantageux que le transistor à effet de champ soit réalisé également en technologie MOS. La grille du transistor à effet de champ et l'"armature" du composant capacitif MOS sont reliées et constituent une sorte de grille flottante qui peut être connectée à un composant permettant d'injecter des porteurs de charge.

On peut aussi faire en sorte qu'il n'existe aucune connexion électrique à proprement parler avec l'environnement extérieur. La connexion de la grille flottante peut être remplacée par une grille de contrôle (électriquement isolée) qui vient charger la grille flottante, par exemple par effet tunnel ou par "porteurs chauds". Cette grille permet de faire transiter des porteurs de charge vers :la grille flottante commune au transistor à effet de champ et au composant capacitif. Cette technique est bien connue des fabricants de mémoires de type EPROM ou EEPROM.

Le transistor à effet de champ et le composant capacitif peuvent constituer une unité intégrée dans un microcircuit compris dans l'entité électronique sécurisée ou faisant partie d'un autre microcircuit logé dans une autre entité sécurisée, telle qu'un serveur.

A certains instants, périodiques ou non, lorsque l'entité électronique sécurisée est couplée à une source d'énergie électrique extérieure, le composant capacitif est chargé à une valeur prédéterminée, connue ou mesurée et mémorisée, et le moyen de mesure de la charge résiduelle est relié à une borne de ce composant capacitif.

Puis le moyen de mesure de la charge résiduelle, notamment le transistor à effet de champ, n'est plus alimenté mais sa grille reliée à la borne du composant capacitif est portée à une tension correspondant à la charge de celui-ci.

Le composant capacitif se décharge lentement au travers de son propre espace diélectrique de sorte que la tension appliquée sur la grille du transistor à effet de champ diminue progressivement.

Lorsqu'une tension électrique est à nouveau appliquée entre le drain et la source du transistor à effet de champ, un courant électrique allant du drain vers la source (ou dans le sens contraire selon les cas) est engendré et peut être recueilli et analysé.

La valeur du courant électrique mesuré dépend des paramètres technologiques du transistor à effet de champ et de la différence de potentiel entre le drain et la source, mais aussi de la tension entre la grille et le substrat. Le courant dépend donc des porteurs de charge accumulés dans la grille flottante commune au transistor à effet de champ et au composant capacitif. Par conséquent, ce courant de drain est aussi représentatif du temps qui s'est écoulé entre une date de référence et la date courante.

Le courant de fuite d'une telle capacité dépend bien sûr de l'épaisseur de son espace diélectrique mais également de tout autre paramètre dit technologique tel que les longueurs et surfaces de contact des éléments du composant capacitif. Il faut également prendre en compte l'architecture tridimensionnelle-des contacts de ces parties, qui peut induire des phénomènes modifiant les paramètres du courant de fuite (par exemple, modification de la valeur de la capacité dite tunnel). Le type et la quantité des dopants et des défauts peuvent être modulés pour modifier les caractéristiques du courant de fuite.

Les variations de température ont aussi une influence, plus précisément la moyenne des apports d'énergie calorifique appliqués à l'entité électronique sécurisée. En fait, tout paramètre intrinsèque à la technologie MOS peut être source de modulation du processus de la mesure du temps.

Avantageusement, l'épaisseur de la couche isolante du transistor à effet de champ est notablement supérieure (par exemple environ trois fois supérieure) à l'épaisseur de la couche isolante du composant capacitif.

Quant à l'épaisseur de la couche isolante du composant capacitif, elle est avantageusement comprise entre 4 et 10 nanomètres.

Pour obtenir une information sensiblement uniquement représentative du temps, on peut prévoir, dans une variante de réalisation, au moins deux sous-ensembles tels que définis ci-dessus, exploités "en parallèle". Les deux composants capacitifs sensibles à la température sont définis avec des fuites différentes, toutes choses égales par ailleurs, c'est-à-dire que leurs espaces diélectriques (épaisseur de la couche d'oxyde de silicium) ont des épaisseurs différentes.

A cet effet, selon une disposition avantageuse de l'invention, l'entité électronique définie ci-dessus est remarquable en ce qu'elle comporte :
au moins deux sous-ensembles précités comprenant chacun :
   un composant capacitif présentant une fuite au travers de son espace diélectrique, des moyens permettant de coupler ce composant capacitif à une source d'énergie électrique pour être chargé par cette source d'énergie électrique et
   un moyen de mesure de la charge résiduelle du composant capacitif, cette charge résiduelle étant au moins en partie représentative du temps qui s'est écoulé après que de composant capacitif a été découplé de la source d'énergie électrique,
   ces sous-ensembles comprenant des composants capacitifs présentant
   des fuites différentes au travers de leurs espaces diélectriques respectifs, et en ce que l'entité électronique sécurisée comporte en outre :
      des moyens de traitement des mesures des charges résiduelles respectives de ces composants capacitifs, pour extraire de ces mesures une information sensiblement indépendante des apports calorifiques appliqués à l'entité électronique sécurisée pendant le temps écoulé.

Par exemple, les moyens de traitement peuvent comporter un tableau de valeurs de temps mémorisées, ce tableau étant adressé par ces mesures respectives. Autrement dit, chaque couple de mesures désigne une valeur de temps mémorisée indépendante de la température et des variations de température pendant la période mesurée. L'entité électronique comporte avantageusement une mémoire associée à un microprocesseur et une partie de cette mémoire peut être utilisée pour mémoriser le tableau de valeurs.

En variante, les moyens de traitement peuvent comporter un logiciel de calcul programmé pour exécuter une fonction prédéterminée permettant de calculer l'information temps, sensiblement indépendante des apports calorifiques, en fonction des deux mesures précitées.

Dans un mode particulier de réalisation, l'entité électronique sécurisée est portable. On peut ainsi tirer parti de tous les avantages pratiques de la portabilité, et par exemple transporter dans une poche ou un portefeuille des moyens de certification du temps sans avoir besoin de se connecter à un serveur.

L'invention est particulièrement adaptée à s'appliquer aux cartes à microcircuit. L'entité électronique sécurisée peut être une carte à microcircuit telle qu'une carte bancaire, une carte de contrôle d'accès, une carte d'identité, une carte SIM ou une carte mémoire (telle qu'une carte SD de Panasonic), ou peut comprendre une carte à microcircuit, ou encore peut être d'un autre type, par exemple, être une carte PCMCIA (telle qu'une carte IBM 4758).

L'invention est en outre remarquable par son niveau d'intégration.

D'autres aspects et avantages de l'invention apparaîtront à la lecture de la description détaillée qui suit de modes particuliers de réalisation, donnés à titre d'exemples non limitatifs. La description est faite en référence aux dessins qui l'accompagnent, dans lesquels :
- la figure 1 est un synoptique représentant, dans un mode particulier de réalisation, une entité électronique sécurisée conforme à la présente invention ;
- la figure 2 est un schéma-bloc d'une carte à microcircuit à laquelle peut s'appliquer l'invention, dans un mode particulier de réalisation ;
- la figure 3 est un schéma de principe d'un sous-ensemble que l'entité électronique sécurisée peut comporter dans un mode particulier de réalisation ; et
- la figure 4 est un schéma-bloc d'une variante du mode de réalisation des figures 1 et 2.

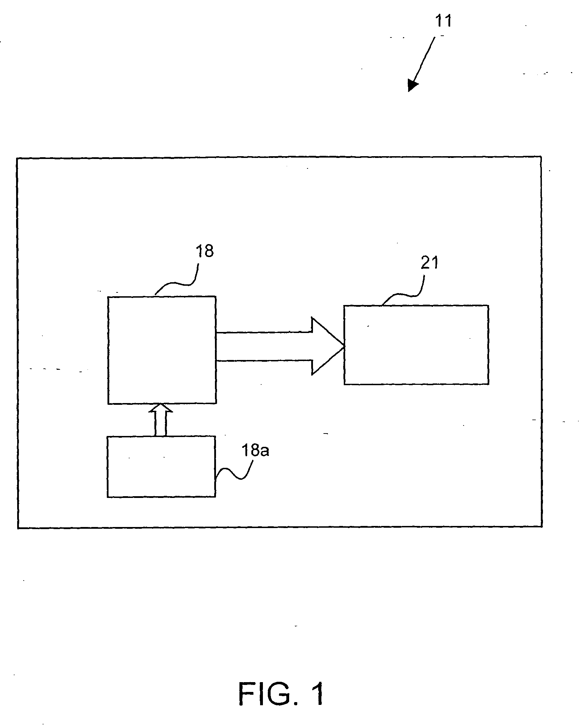

Comme le montre la **figure 1**, dans un mode particulier de réalisation, une entité électronique sécurisée 11 conforme à la présente invention contient une unité 18 de mesure du temps.

L'unité 18 ou cellule de mesure du temps est indépendante de tout système extérieur de mesure du temps, qu'il s'agisse par exemple d'un générateur de signal d'horloge ou de tout autre moyen de mesure du temps situé à l'extérieur par rapport à la carte.

L'entité électronique sécurisée 11 comporte en outre une unité 21 de certification, qui reçoit de l'unité 18 de mesure du temps des informations sur le temps écoulé (la date ou une durée).

Conformément à la présente invention, l'unité de certification 21 est adaptée à fournir une date ou une durée certifiée, ou à certifier l'authenticité d'une date ou d'une durée reçue de l'extérieur, ou à certifier qu'une action a été réalisée dans une période de temps donnée ou avant une date limite.

De préférence, l'entité électronique sécurisée 11 comporte une unité 18a de synchronisation, c'est-à-dire des moyens permettant la mise à l'heure de l'unité 18 de mesure du temps. Cette synchronisation peut avoir lieu une seule fois au début de la vie de l'entité électronique, ou bien à un instant donné, ou bien à divers instants.

L'unité 18a de synchronisation peut être constituée par des moyens d'affectation d'une valeur de décalage (en anglais "*offsef*") dans un registre, cette valeur de décalage étant ensuite additionnée à la mesure du temps écoulé depuis la charge de l'unité 18 de mesure du temps pour obtenir une date courante.

L'unité 18a de synchronisation peut également lire la cellule de mesure du temps (qui va être décrite ci-après en détail dans un mode particulier de réalisation) en cours de décharge et copier la valeur initiale lue ou la date associée dans un registre, cette valeur initiale étant ensuite soustraite de la mesure du temps écoulé depuis la charge de l'unité 18 de mesure du temps pour obtenir une date courante. Cette synchronisation peut être réalisée par connexion sécurisée à un serveur ou un terminal.

En variante, l'unité 18 de synchronisation peut également réinitialiser la date, par exemple en rechargeant la cellule de mesure du temps.

L'unité 18a de synchronisation peut en outre comporter des moyens adaptés à vérifier l'unicité des messages échangés avec l'application, de façon à éviter qu'un message déjà reçu et copié frauduleusement soit pris en compte une deuxième fois de façon non autorisée. Il peut s'agir typiquement d'un compteur de messages, un numéro étant inséré dans chaque message envoyé à l'application et incrémenté à chaque envoi de message.

L'entité électronique sécurisée 11 peut, par exemple sur requête de l'application utilisant l'entité électronique sécurisée, laquelle est située par exemple sur un terminal associé, collaborer avec l'application pour certifier qu'un utilisateur effectue une action dans une période de temps donnée ou avant une date limite.

Sur requête de l'application, l'entité électronique sécurisée 11 peut ainsi :
- fournir une date ou une durée certifiée : typiquement, la date retournée par l'entité électronique est accompagnée d'un code d'authentification de la date (obtenu par une technique connue de l'homme du métier, en utilisant par exemple une fonction dé hachage telle que SHA-1 ou MD-5, et un algorithme de signature tel que l'algorithme RSA). La date et le code d'authentification sont retournés sous forme cryptée afin de garantir la sécurité de la communication,
- valider une date ou une durée donnée par l'application : typiquement, après avoir vérifié la vraisemblance de la date ou de la durée donnée par l'application en utilisant les données reçues de l'unité 18 de mesure du temps, l'entité électronique sécurisée 11 retourne un code d'authentification de la date reçue (obtenu par une technique connue de l'homme du métier, en utilisant par exemple une fonction de hachage telle que SHA-1 ou MD-5, et un algorithme de signature tel que l'algorithme-RSA),
- certifier qu'une action a été réalisée dans une période de temps donnée ou avant une date limite : typiquement, l'entité électronique retourne, éventuellement ultérieurement, un code d'authentification de la date et des données représentatives de l'action (ce code étant obtenu par une technique connue de l'homme du métier, en utilisant par exemple une fonction de hachage telle que SHA-1 ou MD-5, et un algorithme de signature tel que l'algorithme RSA). Les données représentatives de l'action et le code d'authentification sont retournés sous forme cryptée afin de garantir la sécurité de la communication. L'entité électronique reçoit par exemple directement les données représentatives de l'action en provenance de l'application. Dans le mode particulier de réalisation où l'entité électronique est une carte à microcircuit, ces données représentatives peuvent être envoyées par l'application et communiquées à la carte sous forme de commandes du type APDU. En variante, l'entité électronique peut reconnaître elle-même l'action et calculer les données représentatives de cette action.

On décrit maintenant, à titre d'exemples nullement limitatifs, trois applications possibles de la présente invention.

Dans le domaine des courses hippiques, considérons un joueur qui s'inscrit avec son téléphone portable en début de journée auprès du serveur d'un hippodrome. La carte SIM associée au téléphone portable reçoit sous forme chiffrée une heure de référence et un code d'authentification de cette heure de référence (permettant à la carte de vérifier que l'heure de référence est bien fournie par le serveur de l'hippodrome). La carte SIM déchiffre l'heure et l'associe à l'état de la charge de la cellule de mesure du temps. L'heure et la charge sont inscrites dans un fichier en EEPROM. On procède ainsi à la synchronisation de la carte SIM et du serveur de l'hippodrome. Le joueur précise aussi au serveur la somme maximale qu'il souhaite jouer (cette somme sera débitée du compte du joueur si celui-ci ne se reconnecte pas au réseau dans les jours qui viennent) et cette somme est aussi écrite dans le fichier en EEPROM.

Plus tard dans la journée, le joueur parie au moyen de son téléphone portable en indiquant le numéro de la course, le numéro du cheval ainsi que la somme qu'il souhaite parier. La carte SIM soustrait alors la somme inscrite dans le fichier en EEPROM du montant du pari. Dès que le crédit restant au joueur devient négatif ou nul, la carte SIM refuse de prendre en compte le pari. La carte SIM mémorise également les données du pari, par exemple un ordre d'arrivée de chevaux anticipé par le joueur.

Ensuite, la carte SIM détermine l'heure du pari en comparant la charge actuelle de la- cellule avec la charge de référence et l'heure inscrites dans le fichier en EEPROM.

Cette heure, ainsi que les données du pari, sont chiffrées puis sont envoyées au serveur de l'hippodrome par la carte SIM, éventuellement après l'heure limite de fin de jeu de la course considérée, c'est-à-dire après la clôture des paris. La carte SIM envoie également un code d'authentification de l'heure et des données du pari. Pour des raisons de sécurité, le code d'authentification est également envoyé sous forme chiffrée.

Le serveur reçoit ces informations et déchiffre les données du pari et l'heure à laquelle a été effectué le pari. Le serveur vérifie également le code d'authentification reçu afin de s'assurer que ces informations ont bien été envoyées par la carte, et non de façon frauduleuse. Si l'heure déchiffrée indique que le pari a été fait avant la clôture des paris pour la course considérée, le serveur valide le pari ; sinon, il le rejette.

Ainsi, en vertu de la présente invention, le joueur n'est pas obligé d'être physiquement présent à l'hippodrome et/ou d'être relié au serveur durant le pari. Par exemple, au moment du pari, le téléphone du joueur peut se trouver dans une région non couverte par le réseau de téléphonie mobile, ou bien le serveur peut être saturé. Cela n'empêchera pas le joueur de faire valider son pari, car la carte SIM conservera en EEPROM les informations relatives au pari et dès que le téléphone reviendra dans la zone de couverture du réseau, ou dès que le serveur sera à nouveau disponible, la carte SIM enverra au serveur les données relatives au pari.

Dans le domaine des élections faites par téléphone portable, par exemple dans le cadre de certaines émissions télévisées, à un moment donné, un électeur reçoit sur son téléphone un message lui indiquant qu'il peut voter et ce, jusqu'à une certaine date limite. Avec ce message, la date et l'heure courante sont aussi transmises, sous forme chiffrée. La carte SIM du téléphone portable reçoit ce message et déchiffre la date. Elle associe alors la charge de la cellule avec cette date et écrit ces deux données dans un fichier en EEPROM. La synchronisation avec l'entité ayant fourni le message est ainsi réalisée.

Au moment du vote, la carte SIM associe la charge courante de la cellule de mesure du temps avec une date en fonction de la charge et de la date de référence contenues dans le fichier en EEPROM. Cette date, le choix de l'électeur, ainsi qu'un code d'authentification de cette date et de ce choix, sont chiffrés puis envoyés au serveur.

A réception, le serveur déchiffre la date et le choix de l'électeur, vérifie le code d'authentification, puis accepte ou refuse le vote suivant la valeur de la date.

De même que dans l'exemple précédent, le vote peut être effectué sans que le téléphone de l'électeur soit immédiatement connecté au serveur, mémorisé, puis transmis au serveur quelques jours plus tard.

Dans le domaine des logiciels à durée d'utilisation limitée, au début de l'utilisation du logiciel, une carte à microcircuit, associée à l'ordinateur sur lequel on fait fonctionner le logiciel, recharge la cellule de mesure du temps.

Ensuite, à tout instant au cours de l'utilisation du logiciel, la carte peut lire la charge courante de la cellule de mesure du temps, pour obtenir la durée d'utilisation actuelle du logiciel. Par exemple sur demande du logiciel, la carte renvoie cette durée au logiciel accompagnée d'un code d'authentification, le tout sous forme chiffrée. Le logiciel déchiffre la durée reçue et vérifie le code d'authentification reçu afin de s'assurer que ces données sont bien fournies par la carte. Si cette durée d'utilisation est inférieure à la durée autorisée alors le logiciel continue de fonctionner normalement ; sinon, le logiciel ne peut plus fonctionner.

Le logiciel peut aussi demander à la carte de valider la date fournie par le terminal sur lequel le logiciel fonctionne. Par exemple, la carte peut vérifier que la date fournie par le terminal est celle mesurée par la carte à ± 24 heures près, si la licence d'utilisation du logiciel est concédée par exemple pour une durée d'un an. Ainsi, la carte à microcircuit n'a pas besoin de mesurer le temps avec une très grande précision.

Il est à noter qu'il existe beaucoup de variantes dans l'utilisation de la cellule de mesure du temps : on peut utiliser une cellule chargée au début de la vie de la carte, ou une cellule qui se recharge au moment de la synchronisation (par exemple, lors de l'inscription au serveur de l'hippodrome dans l'exemple des courses hippiques, lors de la réception du message indiquant la possibilité de voter dans l'exemple des votes électroniques, ou au début de l'utilisation du logiciel dans l'exemple des logiciels à durée d'utilisation limitée). Dans l'exemple des logiciels à durée d'utilisation limitée, au cas où on considère plusieurs logiciels, on peut utiliser plusieurs cellules de mesure du temps, chacune étant dédiée à un logiciel spécifique.

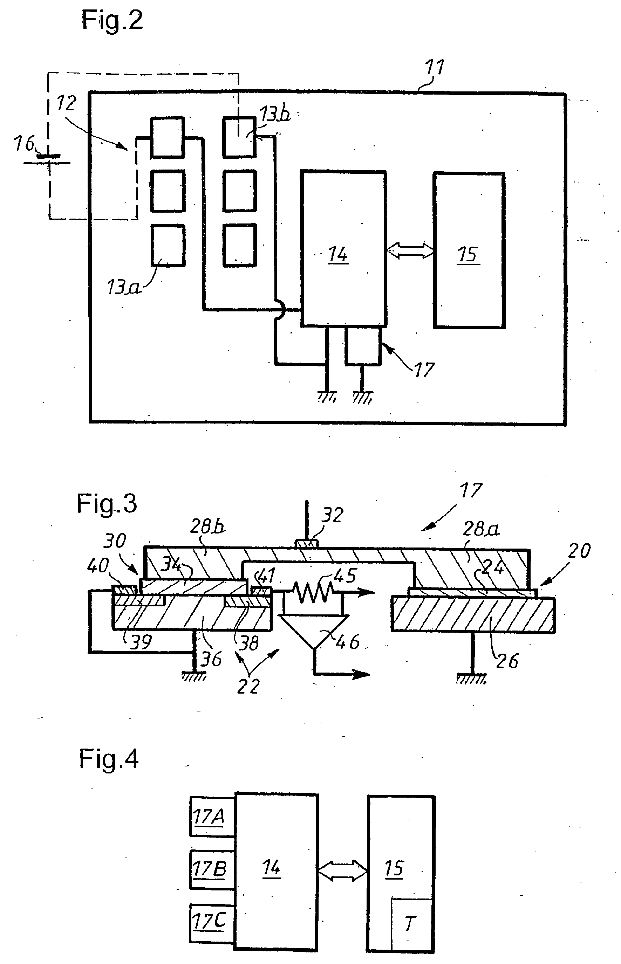

La **figure 2** illustre une entité électronique sécurisée 11 conforme à la présente invention, dans un mode particulier de réalisation où cette entité est une carte à microcircuit. L'entité électronique sécurisée 11 comporte une unité 12 lui permettant d'être couplée à une source d'énergie électrique extérieure 16.

Dans le mode particulier de réalisation représenté, l'entité électronique sécurisée 11 comporte des plages de raccordement métalliques susceptibles d'être connectées à une unité formant un lecteur de carte. Deux de ces plages de raccordement 13a, 13b sont réservées à l'alimentation électrique du microcircuit, la source d'énergie électrique étant logée dans un serveur ou autre dispositif auquel l'entité électronique sécurisée est momentanément raccordée. Ces plages de raccordement peuvent être remplacées par une antenne logée dans l'épaisseur de la carte et susceptible de fournir au microcircuit l'énergie électrique nécessaire à son alimentation tout en assurant la transmission bidirectionnelle de signaux radiofréquence permettant les échanges d'informations. On parle alors de technologie sans contact.

Le microcircuit comprend un microprocesseur 14 associé de façon classique à une mémoire 15.

Dans un exemple particulier de réalisation, l'entité électronique sécurisée 11 comporte au moins un sous-ensemble 17 (ou est associée à un tel sous-ensemble) chargé de la mesure du temps.

Le sous-ensemble 17, qui est représenté plus en détail sur la **figure 3**, est donc logé dans l'entité électronique sécurisée 11. Il peut faire partie du microcircuit et être réalisé dans la même technologie d'intégration que celui-ci.

Le sous-ensemble 17 comprend un composant capacitif 20 présentant une fuite au travers de son espace diélectrique 24 et une unité 22 de mesure de la charge résiduelle de ce composant 20.

Cette charge résiduelle est au moins en partie représentative du temps écoulé après que le composant capacitif 20 a été découplé de la source d'énergie électrique.

Le composant capacitif 20 est chargé par la source d'énergie électrique extérieure soit par connexion directe, comme dans l'exemple décrit, soit par tout autre moyen qui peut amener à charger la grille. L'effet tunnel est une méthode permettant de charger la grille sans connexion directe. Dans l'exemple, la charge du composant capacitif 20 est pilotée par le microprocesseur 14.

Dans l'exemple, le composant capacitif 20 est une capacité réalisée suivant la technologie MOS. L'espace diélectrique 24 de cette capacité est constitué par une couche d'oxyde de silicium déposée à la surface d'un substrat 26 constituant une des armatures du condensateur. Ce substrat 26 est ici connecté à la masse, c'est-à-dire à une des bornes d'alimentation de la source d'énergie électrique extérieure, lorsque celle-ci se trouve raccordée à la carte. L'autre armature du condensateur est un dépôt conducteur 28a appliqué sur l'autre face de la couche d'oxyde de silicium.

Par ailleurs, l'unité 22 de mesure mentionnée précédemment comprend essentiellement un transistor 30 à effet de champ, ici réalisé suivant la technologie MOS, comme la capacité. La grille du transistor 30 est connectée à une borne du composant capacitif 20. Dans l'exemple, la grille est un dépôt conducteur 28b de même nature que le dépôt conducteur 28a qui, comme indiqué ci-dessus, constitue une des armatures du composant capacitif 20.

Les deux dépôts conducteurs 28a et 28b sont reliés l'un à l'autre ou ne constituent qu'un seul et même dépôt conducteur. Une connexion 32 reliée au microprocesseur 14 permet d'appliquer une tension à ces deux dépôts 28a et 28b, pendant un court intervalle de temps nécessaire pour charger le composant capacitif 20. L'application de cette tension est pilotée par le microprocesseur 14.

Plus généralement, la connexion 32 permet de charger le composant capacitif 20 à un moment choisi, sous la commande du microprocesseur 14 et c'est à partir du moment où cette connexion de charge est coupée par le microprocesseur 14 (ou lorsque l'entité électronique sécurisée 11 est découplée dans son ensemble de toute source d'alimentation électrique) que la décharge du composant capacitif 20 au travers de son espace diélectrique 24 commence, cette perte de charge électrique étant représentative du temps écoulé. La mesure du temps implique la mise en conduction momentanée du transistor 30, ce qui suppose la présence d'une source d'énergie électrique appliquée entre drain et source.

Le transistor 30 à effet de champ en technologie MOS comporte, outre la grille, un espace diélectrique de grille 34 séparant cette dernière d'un substrat 36 dans lequel sont définies une région de drain 38 et une région de source 39. L'espace diélectrique de grille 34 est constitué par une couche isolante d'oxyde de silicium. La connexion de source 40 appliquée à la région de source 39 est reliée à la masse et au substrat 36. La connexion de drain 41 est reliée à un circuit de mesure du courant de drain qui comporte une résistance 45 aux bornes de laquelle sont connectées les deux entrées d'un amplificateur différentiel 46. La tension délivrée à la sortie de cet amplificateur est donc proportionnelle au courant de drain.

La grille 28b est mise en position flottante pendant qu'on mesure le temps écoulé. Autrement dit, aucune tension n'est appliquée à la grille pendant cette même mesure. En revanche, puisque la grille est connectée à une armature du composant capacitif 20, la tension de grille pendant cette même mesure est égale à une tension qui se développe entre les bornes du composant capacitif 20 et qui résulte d'une charge initiale de celui-ci réalisée sous le contrôle du microprocesseur 14.

L'épaisseur de la couche isolante du transistor 30 est notablement plus grande que celle du composant capacitif 20. A titre d'exemple non limitatif, l'épaisseur de la couche isolante du transistor 30 peut être environ trois fois supérieure à l'épaisseur de la couche isolante du composant capacitif 20. Selon l'application envisagée, l'épaisseur de la couche isolante du composant capacitif 20 est comprise entre 4 et 10 nanomètres, environ.

Lorsque le composant capacitif 20 est chargé par la source d'énergie électrique extérieure et après que la connexion de charge a été coupée sous la commande du microprocesseur 14, la tension aux bornes du composant capacitif 20 diminue lentement au fur et à mesure que ce dernier se décharge progressivement au travers de son propre espace diélectrique 24. La décharge au travers de l'espace diélectrique 34 du transistor 30 à effet de champ est négligeable compte tenu de l'épaisseur de ce dernier.

A titre d'exemple nullement limitatif, si, pour une épaisseur d'espace diélectrique donnée, on charge la grille et l'armature du composant capacitif 20 à 6 volts à un instant t = 0, le temps associé à une perte de charge de 1 volt, c'est-à-dire un abaissement de la tension à une valeur de 5 volts, est de l'ordre de 24 secondes pour une épaisseur de 8 nanomètres.

Pour des épaisseurs différentes, on peut dresser le tableau suivant :

| | | | | |
|---|---|---|---|---|
| Durée | 1 heure | 1 journée | 1 semaine | 1 mois |
| Epaisseur d'oxyde | 8,17 nm | 8,79 nm | 9,17 nm | 9,43 nm |
| Précision sur le temps | 1,85% | 2,09 % | 2,24% | 3,10 % |

La précision dépend de l'erreur commise sur la lecture du courant de drain (0,1 % environ). Ainsi, pour pouvoir mesurer des temps de l'ordre d'une semaine, on peut prévoir une couche d'espace diélectrique de l'ordre de 9 nanomètres.

La figure 3 montre une architecture particulière qui utilise une connexion directe à la grille flottante (28a, 28b) pour y appliquer un potentiel électrique et donc y faire transiter des charges. On peut aussi procéder à une charge indirecte, comme mentionné précédemment, grâce à une grille de contrôle remplaçant la connexion directe; selon la technologie utilisée pour la fabrication des cellules EPROM ou EEPROM.

La variante de la **figure 4** prévoit trois sous-ensembles 17A, 17B, 17C, chacun associé au microprocesseur 14. Les sous-ensembles 17A et 17B comprennent des composants capacitifs présentant des fuites relativement faibles pour permettre des mesures de temps relativement longs.

Cependant, ces composants capacitifs sont généralement sensibles aux variations de température. Le troisième sous-ensemble 17C comporte un composant capacitif présentant un espace diélectrique très faible, inférieur à 5 nanomètres. Il est de ce fait insensible aux variations de température. Les deux composants capacitifs des sous-ensembles 17A, 17B présentent des fuites différentes au travers de leurs espaces diélectriques respectifs.

En outre, l'entité électronique sécurisée comporte un module de traitement des mesures des charges résiduelles respectives présentes dans les composants capacitifs des deux premiers sous-ensembles 17A, 17B. Ce module de traitement est adapté à extraire de ces mesures une information représentative des temps et sensiblement indépendante des apports calorifiques appliqués à l'entité électronique sécurisée pendant le temps écoulé.

Dans l'exemple, ce module de traitement se confond avec le microprocesseur 14 et la mémoire 15. En particulier, un espace de la mémoire 15 est réservé à la mémorisation d'un tableau T à double entrée de valeurs de temps et ce tableau est adressé par les deux mesures respectives issues des sous-ensembles 17A et 17B. Autrement dit, une partie de la mémoire comporte un ensemble de valeurs de temps et chaque valeur correspond à un couple de mesures résultant de la lecture du courant de drain de chacun des deux transistors des sous-ensembles 17A, 17B sensibles à la température.

Ainsi, au début d'une opération de mesure du temps écoulé, les deux composants capacitifs sont chargés, à une valeur de tension prédéterminée, par la source d'énergie électrique extérieure, via le microprocesseur 14. Lorsque la carte à microcircuit est découplée du serveur ou lecteur de carte ou autre entité, les deux composants capacitifs restent chargés mais commencent à se décharger au travers de leurs propres espaces diélectriques respectifs et, au fur et à mesure que le temps s'écoule, sans que la carte à microcircuit soit utilisée, la charge résiduelle de chacun des composants capacitifs décroît mais différemment dans l'un ou l'autre, en raison des fuites différentes déterminées par construction.

Lorsque la carte est à nouveau couplée à une source d'énergie électrique extérieure, les charges résiduelles des deux composants capacitifs sont représentatives du même intervalle de temps qu'on cherche à déterminer mais diffèrent en raison des variations de température qui ont pu se produire pendant toute cette période de temps.

Pour chaque couple de valeurs de courant de drain, le microcircuit va chercher en mémoire, dans le tableau T mentionné précédemment, la valeur de temps correspondante.

Il n'est pas nécessaire de mémoriser le tableau T. Par exemple, le module de traitement, c'est-à-dire essentiellement le microprocesseur 14, peut comporter une partie de logiciel de calcul d'une fonction prédéterminée permettant de déterminer ladite information sensiblement indépendante des apports calorifiques en fonction des deux mesures.

Le troisième sous-ensemble 17C comporte, comme décrit plus haut, un espace diélectrique extrêmement mince le rendant insensible aux variations de température.

D'autres variantes sont possibles. En particulier, si on veut simplifier le sous-ensemble 17, on peut envisager de supprimer le composant capacitif 20 en tant que tel, car le transistor 30 à effet de champ peut lui-même être considéré comme un composant capacitif avec la grille 28b et le substrat 36 en tant qu'armatures, ces dernières étant séparées par l'espace diélectrique 34. Dans ce cas, on peut considérer que le composant capacitif et l'unité de mesure sont confondus.

On peut mesurer le temps ou une durée écoulé depuis une date de référence, par exemple la date de la synchronisation, de diverses façons.

Une première possibilité consiste à charger la cellule qui mesure le temps une fois, lors de la première mise en service de l'entité électronique. A chaque instant, l'état de la charge de la cellule de mesure du temps est représentatif du temps écoulé depuis la première mise en service.

Une deuxième possibilité consiste à recharger la cellule à chaque mise sous tension de l'entité électronique sécurisée. On mesure ainsi des temps plus courts, qu'on vient cumuler : à chaque mise sous tension, le temps écoulé depuis la dernière mise sous tension de l'entité électronique sécurisée est mesuré, puis le composant capacitif est rechargé. On accumule les temps ainsi mesurés dans un emplacement de la mémoire non volatile de l'entité électronique.

Cet emplacement mémoire mémorise ainsi le temps écoulé depuis la première mise sous tension et permet de connaître à tout moment le temps écoulé.

Le temps qui s'écoule entre l'instant de mesure de la charge du composant capacitif et le moment de sa recharge est parfois non négligeable. Pour prendre en compte cet intervalle de temps, on peut utiliser un second composant dont la fonction sera de prendre le relais du premier pendant cet intervalle de temps.

On peut également utiliser une cellule par besoin de validation ou de certification. Dans ce cas, on rechargera de préférence chaque cellule lors de la synchronisation.

On peut également prévoir d'utiliser des composants capacitifs de précisions différentes afin d'améliorer la précision de la mesure : on choisira, parmi plusieurs mesures, celle obtenue à partir du composant le plus précis qui n'est pas déchargé.

D'autres variantes, à la portée de l'homme du métier, sont possibles.

Ainsi, conformément à l'invention, l'utilisation du compteur de temps à l'intérieur de la carte permet d'améliorer la sécurité puisque le décompte du temps est difficile à falsifier.

L'entité électronique sécurisée conforme à la présente invention peut coopérer avec une ou plusieurs autres entités sécurisées qui, en fonction du résultat de la certification, concéderont ou non des droits à un utilisateur, par exemple.

## Revendications

1. Entité électronique sécurisée (11) contenant un moyen (18) de mesure du temps et comportant un moyen (21) de certification d'une donnée relative à une date ou une durée,
ledit moyen (21) de certification recevant dudit moyen (18) de mesure du temps des informations sur ladite date ou ladite durée et produisant des données de certification de ladite donnée destinées à une entité extérieure,
l'entité électronique sécurisée étant **caractérisée en ce que** lesdites données de certification comprennent un code d'authentification de la date ou de la durée.

2. Entité électronique sécurisée (11) selon la revendication 1, **caractérisée en ce que** ledit moyen (21) de certification est adapté à fournir une date ou une durée certifiée.

3. Entité électronique sécurisée (11) selon la revendication 1, **caractérisée en ce que** ledit moyen (21) de certification est adapté à certifier l'authenticité d'une date ou d'une durée reçue de l'extérieur.

4. Entité électronique sécurisée (11) selon la revendication 1 ou 2, **caractérisée en ce que** ledit moyen (21) de certification est adapté à certifier qu'une action a été réalisée dans une période de temps donnée ou avant une date limite.

5. Entité électronique sécurisée (11) selon l'une quelconque des revendications précédentes, **caractérisée en ce qu'**elle comporte en outre des moyens (18a) de synchronisation.

6. Entité électronique sécurisée (11) selon l'une quelconque des revendications précédentes, **caractérisée en ce que** ledit moyen (21) de certification met en oeuvre des moyens d'authentification.

7. Entité électronique sécurisée (11) selon l'une quelconque des revendications précédentes, **caractérisée en ce que** le moyen (18) de mesure du temps est adapté à fournir une mesure du temps lorsque l'entité électronique (11) n'est pas alimentée par une source d'énergie extérieure.

8. Entité électronique sécurisée (11) selon l'une quelconque des revendications précédentes, **caractérisée en ce que** le moyen (18) de mesure du temps est adapté à fournir une mesure du temps lorsque l'entité électronique (11) n'est pas alimentée électriquement.

9. Entité électronique sécurisée (11) selon l'une quelconque des revendications précédentes, **caractérisée en ce que** le moyen (18) de mesure du temps est adapté à fournir une mesure du temps indépendamment de tout signal d'horloge extérieur.

10. Entité électronique sécurisée (11) selon l'une quelconque des revendications précédentes, **caractérisée en ce que** le moyen (18) de mesure du temps comporte un moyen de comparaison de deux dates.

11. Entité électronique sécurisée (11) selon l'une quelconque des revendications précédentes, **caractérisée en ce qu'**elle comporte au moins un sous-ensemble (17) comprenant :
un composant capacitif (20) présentant une fuite au travers de son espace diélectrique, des moyens permettant de coupler ledit composant capacitif à une source d'énergie électrique pour être chargé par ladite source d'énergie électrique et
un moyen (22) de mesure de la charge résiduelle du composant capacitif (20), ladite charge résiduelle étant au moins en partie représentative du temps qui s'est écoulé après que le composant capacitif (20) a été découplé de la source d'énergie électrique.

12. Entité électronique sécurisée (11) selon la revendication précédente, **caractérisée en ce que** ledit moyen (22) de mesure de la charge résiduelle est compris dans ledit moyen (18) de mesure du temps.

13. Entité électronique sécurisée (11) selon la revendication 11 ou 12, **caractérisée en ce que** le composant capacitif (20) est une capacité réalisée suivant la technologie MOS et dont l'espace diélectrique est constitué par un oxyde de silicium.

14. Entité électronique sécurisée (11) selon la revendication 11, 12 ou 13, **caractérisée en ce que** le moyen (22) de mesure de la charge résiduelle comprend un transistor (30) à effet de champ ayant une couche isolante (34), **en ce que** le composant capacitif (20) comporte une couche isolante (24) et **en ce que** l'épaisseur de la couche isolante (34) du transistor (30) à effet de champ est notablement plus grande que l'épaisseur de la couche isolante (24) du composant capacitif (20).

15. Entité électronique sécurisée (11) selon la revendication précédente, **caractérisée en ce que** l'épaisseur de la couche isolante (24) du composant capacitif (20) est comprise entre 4 et 10 nanomètres.

16. Entité électronique sécurisée (11) selon la revendication 13, 14 ou 15, **caractérisée en ce qu'**elle comporte :
au moins deux sous-ensembles (17A, 17B) comprenant chacun :
un composant capacitif présentant une fuite au travers de son espace diélectrique, des moyens permettant de coupler ledit composant capacitif à une source d'énergie électrique pour être chargé par ladite source d'énergie électrique et
un moyen de mesure de la charge résiduelle du composant capacitif, ladite charge résiduelle étant au moins en partie représentative du temps qui s'est écoulé après que le composant capacitif a été découplé de la source d'énergie électrique,
lesdits sous-ensembles (17A, 17B) comprenant des composants capacitifs présentant des fuites différentes au travers de leurs espaces diélectriques respectifs,
et **en ce que** ladite entité électronique sécurisée (11) comporte en outre :
des moyens (14, 15, T) de traitement des mesures des charges résiduelles respectives desdits composants capacitifs, pour extraire desdites mesures une information sensiblement indépendante des apports calorifiques appliqués à ladite entité (11) pendant le temps écoulé.

17. Entité électronique sécurisée (11) selon la revendication précédente, **caractérisée en ce que** lesdits moyens (14, 15, T) de traitement comportent un logiciel de calcul d'une fonction prédéterminée pour déterminer ladite information sensiblement indépendante des apports calorifiques en fonction desdites mesures.

18. Entité électronique sécurisée selon l'une quelconque des revendications précédentes, **caractérisée en ce qu'**elle est portable.

19. Entité électronique sécurisée (11) selon l'une quelconque des revendications précédentes, **caractérisée en ce qu'**il s'agit d'une carte à microcircuit.

## Claims

1. Secure electronic entity (11) containing means (18) for measuring time and comprising means (21) for certifying an item of data relating to a date or a duration, said certification means (21) receiving from said time measuring means (18) information on said date or said duration and producing data certifying said item of data that is intended for an external entity, the secure electronic entity being **characterised in that** said certification data comprises a date or duration authentication code.

2. Secure electronic entity (11) according to claim 1, **characterised in that** said certification means (21) are adapted to supply a certified date or duration.

3. Secure electronic entity (11) according to claim 1, **characterised in that** said certification means (21) are adapted to certify the authenticity of a date or duration received from the outside.

4. Secure electronic entity (11) according to claim 1 or claim 2, **characterised in that** said certification means (21) are adapted to certify that an action has been effected in a given time period or before a limit date.

5. Secure electronic entity (11) according to any one of the preceding claims, **characterised in that** it further includes synchronisation means (18a).

6. Secure electronic entity (11) according to any one of the preceding claims, **characterised in that** said certification means (21) use authentication means.

7. Secure electronic entity (11) according to any one of the preceding claims, **characterised in that** the time measuring means (18) are adapted to supply a measurement of time when said electronic entity (11) is not supplied with power by an external power supply.

8. Secure electronic entity (11) according to any one of the preceding claims, **characterised in that** the time measuring means (18) are adapted to supply a measurement of time when the electronic entity (11) is not supplied with electrical power.

9. Secure electronic entity (11) according to any one of the preceding claims, **characterised in that** the time measuring means (18) are adapted to supply a time measurement independently of any external clock signal.

10. Secure electronic entity (11) according to any one of the preceding claims, **characterised in that** the time measuring means (18) include means for comparing two dates.

11. Secure electronic entity (11) according to any one of the preceding claims, **characterised in that** it includes at least one subsystem (17) comprising a capacitive component (20) having a leak across its dielectric space, means for coupling said capacitive component to an electrical power supply for it to be charged by said electrical power supply, and means (22) for measuring the residual charge in the capacitive component (20), said residual charge being at least in part representative of the time that has elapsed since the capacitive component (20) was decoupled from the electrical power supply.

12. Secure electronic entity (11) according to the preceding claim, **characterised in that** said means (22) for measuring the residual charge are part of said time measuring means (18).

13. Secure electronic entity (11) according to either claim 11 or claim 12, **characterised in that** the capacitive component (20) is a capacitor implemented in the MOS technology and whose dielectric space consists of silicon oxide.

14. Secure electronic entity (11) according to claim 11, 12 or 13, **characterised in that** the means (22) for measuring the residual charge comprise a field-effect transistor (30) having an insulative layer (34), **in that** the capacitive component (20) includes an insulative layer (24), and **in that** the thickness of the insulative layer (34) of the field-effect transistor (30) is much greater than the thickness of the insulative layer (24) of the capacitive component (20).

15. Secure electronic entity (11) according to the preceding claim, **characterised in that** the thickness of the insulative layer (24) of the capacitive component (20) is from 4 nanometers to 10 nanometers.

16. Secure electronic entity (11) according to claim 13, 14 or 15, **characterised in that** it includes at least two subsystems (17A, 17B) each comprising a capacitive component having a leak across its dielectric space, means for coupling said capacitive component to an electrical power supply for it to be charged by said electrical power supply, and means for measuring the residual charge in the capacitive component, said residual charge being at least in part representative of the time that has elapsed since the capacitive component was decoupled from the electrical power supply, said subsystems (17A, 17B) comprising capacitive components having different leaks across their respective dielectric spaces, and **in that** said secure electronic entity (11) further includes means (14, 15, T) for processing measurements of the respective residual charges in said capacitive components to extract from said measurements information substantially independent of heat input to said entity (11) during the elapsed time.

17. Secure electronic entity (11) according to the preceding claim, **characterised in that** said processing means (14, 15, T) include software for calculating a predetermined function for determining said information as a function of said measurements substantially independently of the heat input.

18. Secure electronic entity (11) according to any one of the preceding claims, **characterised in that** it is portable.

19. Secure electronic entity (11) according to any one of the preceding claims, **characterised in that** it is a microcircuit card.

## Patentansprüche

1. Sichere elektronische Einheit (11), die ein Mittel (18) zum Messen der Zeit enthält und ein Zertifizierungsmittel (21) für ein Datenelement bezüglich eines Datums oder einer Zeitspanne umfasst,
wobei das Zertifizierungsmittel (21) von dem Mittel (18) zum Messen der Zeit Informationen über das genannte Datum oder die Zeitspanne empfängt und Zertifizierungsdaten für das Datenelement erzeugt, die für eine externe Entität bestimmt sind,
wobei die sichere elektronische Einheit **dadurch gekennzeichnet ist, dass** die Zertifizierungsdaten einen Authentifizierungscode des Datums oder der Zeitspanne umfassen.

2. Sichere elektronische Einheit (11) nach Anspruch 1, **dadurch gekennzeichnet, dass** das Zertifizierungsmittel (21) geeignet ist, ein zertifiziertes Datum oder eine zertifizierte Zeitspanne zu liefern.

3. Sichere elektronische Einheit (11) nach Anspruch 1, **dadurch gekennzeichnet, dass** das Zertifizierungsmittel (21) geeignet ist, die Authentizität eines Datums oder einer Zeitspanne, die von außen empfangen werden, zu zertifizieren.

4. Sichere elektronische Einheit (11) nach Anspruch 1 oder 2, **dadurch gekennzeichnet, dass** das Zertifizierungsmittel (21) geeignet ist, zu zertifizieren, dass eine Aktion in einer gegebenen Zeitspanne oder vor einem Abschlusstermin ausgeführt wurde.

5. Sichere elektronische Einheit (11) nach einem der vorhergehenden Ansprüche, **dadurch gekennzeichnet, dass** sie unter anderem Synchronisierungsmittel (18a) umfasst.

6. Sichere elektronische Einheit (11) nach einem der vorhergehenden Ansprüche, **dadurch gekennzeichnet, dass** das Zertifizierungsmittel (21) ein Authentifizierungsmittel implementiert.

7. Sichere elektronische Einheit (11) nach einem der vorhergehenden Ansprüche, **dadurch gekennzeichnet, dass** das Mittel (18) zur Messung der Zeit geeignet ist, eine Messung der Zeit zu liefern, wenn die elektronische Einheit (11) nicht von einer externen Energiequelle gespeist wird.

8. Sichere elektronische Einheit (11) nach einem der vorhergehenden Ansprüche, **dadurch gekennzeichnet, dass** das Mittel (18) zur Messung der Zeit geeignet ist, eine Messung der Zeit zu liefern, wenn die elektronische Einheit (11) nicht elektrisch gespeist wird.

9. Sichere elektronische Einheit (11) nach einem der vorhergehenden Ansprüche, **dadurch gekennzeichnet, dass** das Mittel (18) zur Messung der Zeit geeignet ist, eine Messung der Zeit zu liefern, die vollkommen unabhängig von dem externen Taktsignal ist.

10. Sichere elektronische Einheit (11) nach einem der vorhergehenden Ansprüche, **dadurch gekennzeichnet, dass** das Mittel (18) zur Messung der Zeit ein Mittel zum Vergleich von zwei Daten umfasst.

11. Sichere elektronische Einheit (11) nach einem der vorhergehenden Ansprüche, **dadurch gekennzeichnet, dass** sie wenigstens eine Untereinheit (17) umfasst, die umfasst:
eine kapazitive Komponente (20), die eine Ableitung durch ihr Dielektrikum darstellt, Mittel, die erlauben, die kapazitive Komponente mit einer elektrischen Energiequelle zu koppeln, um von dieser Energiequelle geladen zu werden, und
ein Mittel (22) zum Messen der Restladung der kapazitiven Komponente (20), wobei diese Restladung wenigstens teilweise repräsentativ für die Zeit ist, die vergangen ist, nachdem die kapazitive Komponente (20) von der elektrischen Energiequelle entkoppelt wurde.

12. Sichere elektronische Einheit (11) nach dem vorhergehenden Anspruch, **dadurch gekennzeichnet, dass** das Mittel (22) zum Messen der Restladung in dem Mittel (18) zum Messen der Zeit enthalten ist.

13. Sichere elektronische Einheit (11) nach Anspruch 11 oder 12, **dadurch gekennzeichnet, dass** die kapazitive Komponente (20) eine Kapazität ist, die gemäß der MOS-Technologie realisiert ist, und deren Dielektrikum aus einem Sliziumoxid besteht.

14. Sichere elektronische Einheit (11) nach Anspruch 11, 12 oder 13, **dadurch gekennzeichnet, dass** das Mittel (22) zum Messen der Restladung einen Feldeffekttransistor (30) umfasst, dass die kapazitive Komponente (20) eine Isolierschicht (24) umfasst, und dass die Dicke der Isolierschicht (34) des Feldeffekttransistors (30) erheblich größer als die Dicke der Isolierschicht (24) der kapazitiven Komponente (20) ist.

15. Sichere elektronische Einheit (11) nach dem vorhergehenden Anspruch, **dadurch gekennzeichnet, dass** die Dicke der Isolierschicht (24) der kapazitiven Komponente (20) zwischen 4 und 10 Nanometer umfasst.

16. Sichere elektronische Einheit (11) nach Anspruch 13, 14 oder 15, **dadurch gekennzeichnet, dass** sie umfasst:
wenigstens zwei Untereinheiten (17A, 17B), die jeweils umfassen:
eine kapazitive Komponente, die eine Ableitung bzw. ein Leck durch ihr Dielektrikum darstellt, Mittel, die erlauben, die kapazitive Komponente mit einer elektrischen Energiequelle zu koppeln, um von dieser Energiequelle geladen zu werden, und
ein Mittel zum Messen der Restladung der kapazitiven Komponente, wobei diese Restladung wenigstens teilweise repräsentativ für die Zeit ist, die vergangen ist, nachdem die kapazitive Komponente von der elektrischen Energiequelle entkoppelt wurde,
wobei diese Untereinheiten (17A, 17B) kapazitive Komponenten umfassen, die jeweils unterschiedliche Lecks durch ihre jeweiligen Dielektrika darstellen,
und dadurch, dass die sichere elektronische Einheit (11) unter anderem umfasst:
Verarbeitungsmittel (14, 15, T) für die Messungen der jeweiligen Restladungen der kapazitiven Komponenten, um aus diesen Messungen eine Information zu extrahieren, die deutlich unabhängig von der Wärmezufuhr ist, die auf die Einheit (11) während der vergangenen Zeit angewendet wird.

17. Sichere elektronische Einheit (11) nach dem vorhergehenden Anspruch 1, **dadurch gekennzeichnet, dass** Verarbeitungsmittel (14, 15, T) eine Rechensoftware mit einer vorgegebenen Funktion zum Bestimmen der genannten Information, die deutlich unabhängig von den Wärmezufuhr ist, als Funktion der Messungen umfasst.

18. Sichere elektronische Einheit (11) nach einem der vorhergehenden Ansprüche, **dadurch gekennzeichnet, dass** sie tragbar ist.

19. Sichere elektronische Einheit (11) nach einem der vorhergehenden Ansprüche, **dadurch gekennzeichnet, dass** es sich um eine Chipkarte handelt.
